# EUROPEAN PATENT SPECIFICATION

(11) **EP 2 220 948 B1**
(45) Date of publication and mention of the grant of the patent: **09.05.2012**
(21) Application number: 10002074.2
(22) Date of filing: 15.08.2007
(51) Int. Cl.: A23L 2/00, A23L 2/44, A23L 2/54, A23L 2/70, A23L 2/82

(54) **Shelf-stable, non-alcoholic, haze-free malt beverage and methods**
Lagerstabiles, alkohol- und trübungsfreies Malzgetränk und entsprechendes Verfahren
Boisson à base de malt longue conservation, sans alcool ni trouble, et procédés

(30) Priority: 21.08.2006 US 508077
(43) Date of publication of application: 25.08.2010
(62) Divisional of application: 07840960.4
(73) Proprietor: PepsiCo, Inc., Purchase, New York 10577 (US)
(72) Inventor: McCormik, Casey, Valhalla, NY 10595 (US); Akinruli, Helen, Valhalla, NY 10595 (US); Lalak, Pam, Valhalla, NY 10595 (US); Puccini, Paula, Valhalla, NY 10595 (US); Pesce, Thaddeus, Valhalla, NY 10595 (US); Culver, Cathy, Valhalla, NY 10595 (US); Cardona, Cyndia, Valhalla, NY 10595 (US); Digiacomo, Ralph, Valhalla, NY 10595 (US)
(74) Representative: Duxbury, Stephen

(56) References cited:
- WO-A1-2005/113738
- US-A- 5 294 450

## Description

### TECHNICAL FIELD

The invention relates to malt beverages and to methods of making such beverages. More particularly, the invention relates to shelf-stable, non-alcoholic, hazefree malt beverages and to methods of making such beverages.

### BACKGROUND OF THE INVENTION

Malt beverages are naturally hazy when cold. Generally, hazy beverages are viewed as being less appealing than clear beverages. Furthermore, some consumers may believe that the haziness is a sign of contamination. Thus, there is a need for haze-free malt beverages. In addition, a need exists for an economical and efficient way to produce such malt beverages. WO-A-2005/11/3738 discloses a process for preparing a liquid that contains haze sensitive proteins. US-A-5294450 discloses a colorless, flavored malt beverage.

In addition, a need exists for a method of preserving the malt beverage to produce a preserved, shelf-stable, haze-free malt beverage.

### SUMMARY OF THE INVENTION

In accordance with one aspect of the invention, a method of making a haze-free nonalcoholic malt beverage is provided. The method includes forming a malt solution and the coagulant should be suitable for coagulating protein from the malt containing a malt extract, a coagulant and water. The malt extract contains protein. The method also includes adjusting the pH of the malt solution as needed so that the pH of the malt solution is favorable for coagulation of the protein. Preferably, the pH is less than about 4.0. The method further includes coagulating the protein from the malt extract in the malt solution. Next the coagulated protein from the malt solution is removed to form a refreshing haze-free malt beverage. Preferably, the coagulated protein is removed by settling the coagulated protein and decanting the malt solution. Preferably, the malt solution when decanted contains about 10% to about 40% of malt sugars from malt extract on a weight by volume of solution basis.

In accordance with another aspect of the invention, a shelf-stable, substantially haze-free beverage is provided. Preferably, the beverage has a pH of 2.5 - 4.0, a chemical preservative, carbon dioxide and malt extract. The chemical preservative includes a sorbate salt, a benzoate salt, sorbic acid, benzoic acid or mixtures thereof in a total amount less than or equal to about 1000 mg/I. The carbon dioxide is present in the beverage in excess of 1.5 volumes per volume of beverage and in excess of 1.8 volumes when-the hardness of the beverage as calcium carbonate exceeds about 25 mg/I. Most preferably, the beverage contains substantially no other preservatives.

In accordance with another aspect of the invention, a method of making a shelf-stable beverage is provided. The method includes carbonating a solution with more than about 1.5 volumes of carbon dioxide per volume of finished beverage; adding to the solution a chemical preservative, and then adding an acidulant to the solution so that the finished beverage has a pH of from about 2.5 to about 4.0. The chemical preservative includes a sorbate salt, a benzoate salt, sorbic acid, benzoic acid or mixtures thereof in a total amount of not more than 1000 mg/I in the finished beverage.

Accordingly, the invention provides an improved method of preventing haze in malt beverages and an improved method of preserving malt beverages. The invention also provides a haze-free malt beverage which does not have off-flavors from chemical preservatives.

### DETAILED DESCRIPTION OF THE INVENTION

In accordance with one aspect of the invention, a method of making a haze-free non-alcoholic malt beverage is provided. As used herein, the term "hazefree" means having a clear, sediment-free appearance to the naked eye. In particular, a "haze-free beverage" is a beverage that has a pH value less than the isoelectric point of the chill haze producing proteins in the malt solution, or a pH value of less than 4.2.

Generally, a malt solution can be made in a suitable container or vessel, which may be a sedimentation tank. The solution is created by mixing water, coagulant and malt extract. The water is preferably preheated to a desired temperature which may be from about 70°F to about 170°F, preferably about 80°F to about 135°F, more preferably about 90°F to about 100°F, for example. After the water is added, a coagulant is added, which may be mixed into the malt solution under high shear mixing conditions. Any suitable coagulant that can bind with protein in an acidic solution may be used. A preferred coagulant is carrageenan. A preferred carrageenan includes kappa carrageenan. K100 Carrageenan from CP Kelco is a suitable coagulant for use in accordance with the invention.

Optionally, a preservative can be added to achieve the full benefit of the invention. The preservative includes a sorbate salt, a benzoate salt, sorbic acid, benzoic acid or mixtures thereof. The preservative is added in an amount so that the amount of preservative in the finished beverage is less than or equal to about 1,000 mg/I. Preferably, the preservative, if present, is added before the malt extract. Next malt extract is added to the tank. The malt extract added is preferably added in an amount to form a malt solution containing from about 10% to about 40% of malt sugars from malt extract on a weight by volume of solution basis. More preferably, the concentration of malt sugars is from about 12% to about 21 %, for example, 15%, on a weight by volume of solution basis.

An acidulant is preferably added to adjust the pH of the malt solution to about 4.0 or less. The acidulant is preferably added after the preservative is added. In particular, any preservative used that is not soluble in an acidic medium, such as benzoate, must be completely dissolved before any acidulant is added. Substantially all the acidulant desired for making the final malt beverage can be added at this time. Any suitable food grade acidulant may be used including citric acid, malic acid, phosphoric acid, lactic acid and mixtures thereof. A pH between about 2.3 and about 2.8 in the malt solution is particularly suitable.

Alternatively, and depending on the coagulant, the pH can be adjusted subsequently or as desired or needed to promote protein coagulation.

In accordance with the invention, the making of the malt solution described above results in sufficient removal of protein from the malt to produce a hazefree or a substantially haze-free beverage. Also, the malt extract may be one that is purchased commercially as a concentrate or it may be freshly extracted from malt and be relatively dilute compared to the commercial concentrate, for example.

The protein is coagulated with the malt extract in the malt solution by the coagulant. Coagulation can be achieved and enhanced by various treatments and conditions. Generally, the malt solution is held within the previously described temperature ranges for about 30 minutes to about 12 hours. It is not necessary or generally desirable to boil the malt solution or to chill it below about 41 F to coagulate and remove the protein. To enhance coagulation, the solution may be mixed under low shear for a desired period of time, which may be for about 1 hour. The coagulated protein may be removed from the malt solution by any suitable procedure, including, for example, by settling out the coagulated proteins and decanting the solution. The coagulated protein may be removed by a physical process, which may be by filtration or centrifugation, for example. Alternatively, the coagulated protein may be removed by a chemical process, such as ion exchange resins, for example. The clarified solution can be further processed to produce a haze-free malt beverage.

In particular, the malt solution may be concentrated to a brix of about 70-85% to form a concentrate which can be dried to form a dry beverage mix for later reconstitution. The malt solution can be diluted and other ingredients added as desired, including flavors, preservatives and colorants, for example. In addition, the resulting malt beverage may be pasteurized or distributed under refrigeration.

However, to fully achieve the benefits of the invention, typically the malt beverage is rendered shelf stable as will be described below. Additional acidulants of a desired type may be added, preferably to achieve a pH of from about 2.5 to about 4.0 in the final beverage. The beverage is typically carbonated with more than about 1.5 volumes of carbon dioxide per volume of finished beverage and more than about 1.8 volumes of carbon dioxide per volume of finished beverage when the finished beverage has a hardness as CaCO₃ in excess of about 25 mg/I. The beverage may be carbonated by the addition of carbonated dilution water during bottling or by direct carbonation of the malt beverage. Other additional ingredients may be added as will be described later.

In accordance with another aspect of the invention, a shelf-stable, substantially haze-free beverage is provided. The beverage has a pH in the range of from about 2.5 to about 4.0, a chemical preservative, carbon dioxide and malt extract. The chemical preservative may be a chemical preservative selected from a sorbate salt, a benzoate salt, sorbic acid, benzoic acid or mixtures thereof in an amount less than about 1,000 mg/I. Preferably, the finished beverage contains about 100 to about 600 mg/I of a-benzoate salt or benzoic acid and about 50 to about 400 mg/I of sorbate salt or sorbic acid. A sodium or potassium benzoate salt and a sodium sorbate salt are the preferred added preservatives.

Preferably, the carbon dioxide is present in the beverage in excess of about 1.5 volumes per volume of beverage and in excess of about 1.8 volumes when the hardness of the beverage as calcium carbonate exceeds about 25 mg/I.

Any suitable malt extract may be used. The malt extract may be extracted from any kind of malt or combinations of malt; the selection of malts is dependent on the desired taste. Caramel malts are generally desirable because they provide a caramel flavor. The malt extract may have enzymatic activity or not, as desired.

No other preservatives, are necessary. However, known preservatives such as tannic acid, cinnamic acid, dialkyl dicarbonates, natamycin, nisin, polyphosphate, parabens, proprionic acid, proprionate salts and EDTA may be included in the beverage composition for other purposes.

In an added-calorie or in a full-calorie embodiment of the beverage, the finished malt beverage may contain added nutritive sweeteners, as desired, such as fructose, glucose, sucrose and mixtures thereof, for example, including high fructose corn syrup (HFCS-42 or HFCS-55) and medium invert sugar. The full-calorie embodiment preferably has a brix of 8-14%, of which the malt extract contributes a brix of 0.5 - 5.0%. Reduced-calorie or low calorie embodiments can contain non-nutritive and nutritive sweeteners, as desired.

Typically, the water used to prepare the beverage has been treated to eliminate or reduce undesirable materials, including contaminants and compounds that might contribute an off-flavor to the beverage. Preferably, at least a substantial portion or all of the water used has a total dissolved solids content less than about 500 mg/I and an alkalinity of less than about 50 mg/I of the added water in the finished beverage.

Examples of optional additional ingredients include, but are not limited to, flavors, foaming agents, anti-foaming agents, hydrocolloids, polysaccharides, juices, antioxidants , caffeine, coffee solids, tea solids, herbs, nutraceutical compounds, electrolytes, vitamins, minerals, amino acids, colorants, emulsifiers, and oils as known in the art. Ascorbic acid may be used as an antioxidant. Non-emulsion fruit flavors are generally the preferred type of flavors for use in the beverages of the invention. Flavors are typically used at levels from 0.02% to 0.35% by volume of the finished beverage. Generally, the beverage is non-alcoholic and does not contain hops or hop extract.

### Example 1

A method of the present invention which has been used to produce a haze-free malt beverage includes the following steps.
1. Add water to sedimentation tank at 90°F - 100°F.
2. Add carrageenan under high shear to sedimentation tank. The carrageenan used was K100 from CP Kelco, which is primarily a kappa carrageenan.
3. Add preservatives to sedimentation tank.
4. Add malt extract to sedimentation tank to create about a 15% wt/ volume solution.
5. Add citric acid.
6. Mix tank under low shear for 1 hour.
7. Settle proteins out over 12 hours.
8. Pump malt solution without disturbing the settled proteins to a syrup tank where nutritive sweeteners, flavor, and softened water are added. The resulting syrup has a pH of 2.4-2.8.
9. Carbonate and bottle the beverage at a 1:0 to 1:4 ratio of syrup to treated dilution water.
The order of the first five steps can be changed based on different circumstances.

### Example 2

A formulation of a preferred malt beverage formed in accordance with the present invention is described as follows:
- 1-3% w/v of 80% brix (liquid) malt extract providing a brix of 0.8 - 2.4% to the beverage; light amber malt extract, which preferably has no enzymatic activity, but others are possible such as dark or gold. The liquid malt extract contains caramel.
- Sufficient nutritive sweetener to create a brix of 10-13%. The nutritive sweetener may be sucrose, high fructose corn syrup, or medium invert sugar (∼50% sucrose, ∼25% fructose, ∼25% glucose/dextrose).
- Benzoate Ion at 100-300 mg/L. A potassium or sodium salt may be added.
- Sorbate Ion at 50-300 mg/L. A potassium salt is preferred.
- pH: 2.50 - 3.00
- CO2: Carbonation must be no less than 2.3 volumes if hardness of the finished beverage is more than 25 ppm (as CaCO3) or no less than 2.0 volumes if hardness is less than 25 ppm (as CaC03).
- Treated water.
- Acidulant. Citric acid at 3,461 mg/L is preferred, although any food grade acid that can bring the pH within the specified range is appropriate (i.e. lactic, malic, tartaric, etc).
- Non-emulsion flavors, preferably fruit flavors. Flavors can be used at levels from 0.02% to 0.35% v/v in the finished beverage.
- Carrageenan is used, but is not considered to be an ingredient because it settles out with the protein.
While the invention has been described with respect to certain preferred embodiments, as will be appreciated by those skilled in the art, it is to be understood that the invention is capable of numerous changes, modifications and rearrangements and such changes, modifications and rearrangements are intended to be covered by the claims.

## Claims

1. A method of making a shelf-stable non-alcoholic malt beverage comprising:
adding malt extract containing protein to a solution;
carbonating the solution with more than 1.5 volumes of carbon dioxide per volume of finished beverage;
adding to the solution a chemical preservative selected from the group consisting of a sorbate salt, a benzoate salt, sorbic acid, benzoic acid and mixtures thereof in an amount less than or equal to 1,000 mg/L in the finished beverage; and then
adding an acidulant to the solution so that the finished beverage has a pH of from 2.5 to 4.0 further comprising;
adding a coagulant to the nonalcoholic solution;
coagulating protein in the nonalcoholic solution from the malt extract; and
removing coagulated protein from the nonalcoholic malt solution to form the malt beverage.

2. The method of Claim 1, wherein removing the protein comprises settling the coagulated protein and decanting the malt solution.

3. The method of Claim 1, wherein the malt solution comprises from 10% to 40% of malt sugars from malt extract on a weight by volume of solution basis.

4. The method of Claim 1, wherein the finished beverage contains 1.8 volumes of carbon dioxide per volume of beverage when the finished beverage has a hardness as calcium carbonate in excess of 25 mg/L.

5. A non-alcoholic malt beverage obtainable according to any of the preceding claims 1-4.

## Patentansprüche

1. Ein Verfahren zur Erzeugung eines lagerstabilen nicht alkoholischen Malzgetränks, welches umfasst:
das Zugeben eines Malzextrakts, der Protein enthält, zu einer Lösung;
das Carbonisieren der Lösung mit mehr als 1,5 Volumina Kohlendioxid pro Volumen des fertigen Getränks;
das Zugeben zu der Lösung eines chemischen Konservierungsmittels, das ausgewählt ist aus der Gruppe, bestehend aus einem Sorbatsalz, einem Benzoatsalz, Sorbinsäure,
Benzoesäure und Mischungen von diesen, in einer Menge von weniger als oder gleich 1-000 mg/L in dem fertigen Getränk; und dann
das Zugeben eines Säuerungsmittels zu der Lösung, so dass das fertige Getränk einen pH von 2,5 bis 4,0 aufweist, wobei dieses weiterhin umfasst:
das Zugeben eines Koagulierungsmittels zu der nicht alkoholischen Lösung;
das Koagulieren von Protein in der nicht alkoholischen Lösung aus dem Malzextrakt; und
das Entfernen von koaguliertem Protein aus der nicht alkoholischen Malzlösung, um das Malzgetränk zu bilden.

2. Das Verfahren nach Anspruch 1, wobei das Entfernen des Proteins das Absetzen lassen des koagulierten Proteins und das Dekantieren der Malzlösung umfasst.

3. Das Verfahren nach Anspruch 1, wobei die Malzlösung von 10% bis 40% an Malzzuckern aus Malzextrakt auf einer Basis von Gewicht zu Volumen der Lösung umfasst.

4. Das Verfahren nach Anspruch 1, wobei das fertige Getränk 1,8 Volumina an Kohlendioxid pro Volumen des Getränks enthält, wenn das fertige Getränk eine Härte in Bezug auf Calciumcarbonat über 25 mg/L aufweist.

5. Ein nicht alkoholisches Malzgetränk, das gemäß irgendeinem der vorhergehenden Ansprüche 1 - 4 erhältlich ist.

## Revendications

1. Procédé de préparation d'une boisson à base de malt non alcoolique de longue conservation comprenant :
l'ajout d'un extrait de malt contenant une protéine à une solution ;
la carbonatation de la solution avec plus de 1,5 volume de dioxyde de carbone par volume de boisson finie ;
l'ajout à la solution d'un conservateur chimique choisi dans le groupe constitué par un sel de sorbate, un sel de benzoate, l'acide sorbique, l'acide benzoïque et un mélange de ceux-ci en une quantité inférieure ou égale à 1000 mg/l dans la boisson finie ; et ensuite
l'ajout d'un acidifiant à la solution de sorte que la boisson finie ait un pH de 2,5 à 4,0, comprenant en outre :
l'ajout d'un coagulant à la solution non alcoolique ;
la coagulation de la protéine dans la solution non alcoolique provenant de l'extrait de malt ; et
l'élimination de la protéine coagulée de la solution à base de malt non alcoolique pour former la boisson à base de malt.

2. Procédé selon la revendication 1, dans lequel l'élimination de la protéine comprend le dépôt de la protéine coagulée et la décantation de la solution à base de malt.

3. Procédé selon la revendication 1, dans lequel la solution à base de malt comprend de 10 % à 40 % de sucres de malt provenant de l'extrait de malt sur la base d'un poids par volume de la solution.

4. Procédé selon la revendication 1, dans lequel la boisson finie comprend 1,8 volumes de dioxyde de carbone par volume de boisson lorsque la boisson finie présente une dureté sous forme de carbonate de calcium supérieure à 25 mg/l.

5. Boisson à base de malt non alcoolique pouvant être obtenue selon l'une quelconque des revendications 1 à 4.
